# EUROPÄISCHE PATENTANMELDUNG

(11) **EP 1 460 301 A2**
(43) Veröffentlichungstag der Anmeldung: **22.09.2004**
(21) Anmeldenummer: 04101127.1
(22) Anmeldetag: 18.03.2004
(51) Int. Cl.: F16D 65/21, F16D 65/14

(54) **Elektromechanisch betätigbare Scheibenbremse**

(30) Priorität: 18.03.2003 DE 10311740
(71) Anmelder: Continental Teves AG & Co. OHG, 60488 Frankfurt am Main (DE)
(72) Erfinder: Linhoff, Paul, 61267 Neu-Anspach (DE); Schmitt, Stefan Johannes, 65343 Eltville (DE); Völkel, Jürgen, 60486 Frankfurt (DE); Pohlmann, Andreas, 65760, Eschborn (DE)

(57) **Zusammenfassung**

Die Erfindung betrifft eine elektromechanisch betätigbare Scheibenbremse für Kraftfahrzeuge mit einer Betätigungseinheit, die im wesentlichen durch einen Elektromotor (5) gebildet ist, dessen Rotor (4) durch eine Verriegelungseinheit mit einem Verriegelungselement (2) verriegelbar ist, so dass eine integrierte Feststellbremsvorrichtung entsteht.

Um bei einem Defekt des Elektromotors oder bei einem Ausfall der elektrischen Energieversorgung einen Notlösevorgang der verriegelten Feststellbremsvorrichtung der elektromechanisch betätigbaren Scheibenbremse durchführen zu können, ist eine mechanische Notlösevorrichtung (1) vorgesehen, die auf das Verriegelungselement wirkt.

## Beschreibung

Die Erfindung betrifft eine elektromechanisch betätigbare Scheibenbremse für Kraftfahrzeuge mit einer Feststellbremsvorrichtung und einer Betätigungseinheit mit einem Elektromotor, dessen Rotor durch eine Verriegelungseinheit mit einem Verriegelungselement verriegelbar ist.

Eine derartige elektromechanisch betätigbare Scheibenbremse ist aus der Offenlegungsschrift DE 102 34 848 A1 bekannt. Die vorbekannte Scheibenbremse weist einen Elektromotor auf, dessen Rotor durch eine von einem Elektromagneten schaltbare Sperrklinke in eingeschalteter Stellung lediglich in Zuspannrichtung drehbar ist, während eine Bewegung in Gegenrichtung unterdrückt wird. Bei einer Bewegung des Rotors in Zuspannrichtung wird die Sperrklinke aus ihrer eingeschalteten Stellung gedrückt und mit Hilfe einer Feder in eine abgeschaltete Stellung gebracht. Zu diesem Zweck weist die vorbekannte Scheibenbremse neben dem Elektromagneten einen Permanentmagneten auf, dessen Magnetfeld geschwächt wird, wenn die Sperrklinke während einer Bewegung des Rotors in Zuspannrichtung aus ihrer eingeschalteten Position gedrückt wird. Die Verriegelung der Scheibenbremse kann also auch bei einem Defekt des Elektromagneten aufgehoben werden. Als weniger vorteilhaft ist bei der vorbekannten Scheibenbremse anzusehen, dass der Aufbau mit den sich gegenseitig beeinflussenden Magneten komplex ist. Außerdem ist ein Notlösevorgang der vorbekannten Scheibenbremse nicht möglich, wenn der Elektromotor oder die gesamte Stromversorgung ausfällt, was als nachteilig angesehen wird.

Aus der deutschen Patentanmeldung DE 199 44 876 A1 ist außerdem eine Betätigungseinheit für eine elektromechanisch betätigbare Scheibenbremse mit einem Elektromotor bekannt, dessen Rotor mit einem Zahnkranz verbunden ist, der mit einer Sperrklinke zusammen wirkt. Ein Notlösevorgang während eines Defekts des Elektromotors oder eines die Sperrklinke betätigenden Elektromagnets ist nicht vorgesehen, was als weniger vorteilhaft anzusehen ist.

Es ist daher Aufgabe der vorliegenden Erfindung, eine elektromechanisch betätigbare Scheibenbremse der eingangs genannten Gattung derart zu verbessern, dass ein Notlösevorgang mit einfachen Mitteln realisiert werden kann.

Diese Aufgabe wird erfindungsgemäß dadurch gelöst, dass eine mechanische Vorrichtung vorgesehen ist, die ein Lösen des Eingriffs des Verriegelungselements mit dem Rotor ermöglicht.

Zur Konkretisierung des Erfindungsgedankens ist vorgesehen, dass die Vorrichtung durch einen mit dem Verriegelungselement in zugkraftübertragender Verbindung stehenden Seilzug gebildet ist.

Bei einer anderen, vorteilhaften Ausgestaltung des Erfindungsgegenstandes ist die Vorrichtung durch ein mit dem Verriegelungselement in kraftübertragender Verbindung stehendes Gewindeelement gebildet.

Bei einer vorteilhaften Ausgestaltung des Erfindungsgegenstandes wird die Verriegelungseinheit durch ein Klinkenrad und eine von einem Elektromagneten betätigbare Sperrklinke gebildet, wobei der Anker des Elektromagneten mit Hilfe einer Feder in eine stabile Lage bringbar ist, in der die Sperrklinke mit dem Klinkenrad nicht in Eingriff steht.

Besonders vorteilhaft ist es, wenn die Verriegelungseinheit derart ausgebildet ist, dass der Rotor in Zuspannrichtung drehbar ist, wenn die Sperrklinke mit dem Klinkenrad in Eingriff steht.

Eine weitere vorteilhafte Ausgestaltung des Erfindungsgegenstandes sieht vor, dass die Zähne des Klinkenrades und eine Flanke der Sperrklinke, die während einer Verriegelung mit den Zähnen des Klinkenrades in Kontakt steht, derart ausgebildet sind, dass die Feder die Sperrklinke nicht mit dem Klinkenrad außer Eingriff bringen kann, solange auf dem Rotor ein Drehmoment entgegen der Zuspannrichtung lastet.

Die Erfindung wird in der nachfolgenden Beschreibung eines Ausführungsbeispiels unter Bezugnahme auf die beiliegenden Zeichnungen näher erläutert. In der Zeichnung zeigt:
- Fig. 1: eine Ausführung einer erfindungsgemäßen, elektromechanisch betätigbaren Scheibenbremse im Axialschnitt,
- Fig. 2a: eine lediglich teilweise dargestellte Seitenansicht einer Verriegelungseinheit, die aus einem Klinkenrad und einer Sperrklinke gebildet wird, mit einer Notlösevorrichtung in einer ersten Ausführung,
- Fig. 2b: eine vergrößerte Teilansicht der mit dem Klinkenrad in Eingriff stehenden Sperrklinke.
- Fig. 3: eine Notlösevorrichtung in einer zweiten Ausführung in Teilansicht,

Die in der Zeichnung dargestellte, erfindungsgemäße elektromechanisch betätigbare Scheibenbremse, besteht im wesentlichen aus einer Betätigungseinheit und einem lediglich schematisch angedeutetem Bremssattel 21, der in einem nicht gezeigten feststehenden Halter verschiebbar gelagert ist. Ein Paar von Reibbelägen 24 und 25 ist im Bremssattel 21 derart angeordnet, dass sie der linken und der rechten Seitenfläche einer nicht dargestellten Bremsscheibe zugewandt sind.

Nachstehend wird der in der Zeichnung rechts gezeigte Reibbelag 24 als erster Reibbelag und der andere, mit 25 bezeichnete Reibbelag als zweiter Reibbelag bezeichnet.

Während der erste Reibbelag 24 mittels eines Betätigungselements 22 durch die Betätigungseinheit direkt mit der nicht dargestellten Bremsscheibe in Eingriff bringbar ist, wird der zweite Reibbelag 25 durch die Wirkung einer bei der Betätigung der Anordnung vom Bremssattel 21 aufgebrachten Reaktionskraft gegen die gegenüberliegende Seitenfläche der Bremsscheibe gedrückt.

Die Betätigungseinheit, die mittels nicht gezeigter Befestigungsmittel am Bremssattel angebracht ist, weist einen modularen Aufbau auf und besteht im wesentlichen aus drei selbstständig handhabbaren Baugruppen bzw. Modulen, und zwar aus einer Antriebseinheit 10, einem den ersten Reibbelag 24 betätigenden ersten Übersetzungsgetriebe 20 und einem zwischen der Antriebseinheit 10 und dem ersten Übersetzungsgetriebe 20 wirkungsmäßig geschalteten zweiten Übersetzungsgetriebe 30. Die Antriebseinheit 10 besteht aus einem Elektromotor 5, der im dargestellten Beispiel als ein permanentmagneterregter, elektronisch kommutierter Motor ausgebildet ist, dessen Stator 9 unbeweglich in einem Motorgehäuse angeordnet ist und dessen Rotor 4 durch einen ringförmigen Träger gebildet ist, der mehrere Permanentmagnetsegmente trägt. Zwischen dem Elektromotor 5 und dem vorhin erwähnten Betätigungselement 22 ist wirkungsmäßig das erste Untersetzungsgetriebe 20 angeordnet, das als ein Kugelgewindetrieb 26 bis 28 ausgebildet ist. Der Kugelgewindetrieb besteht dabei aus einer Gewindemutter 26 sowie einer Gewindespindel 27, wobei zwischen der Gewindemutter 26 und der Gewindespindel 27 mehrere Kugeln 28 angeordnet sind, die bei einer Rotationsbewegung der Gewindespindel 27 umlaufen und die Gewindemutter 26 in eine axiale bzw. translatorische Bewegung versetzen.

Die Anordnung ist dabei derart getroffen, dass der Rotor 4 des Motors 5 unter Zwischenschaltung des zweiten Untersetzungsgetriebes 30 die Gewindespindel 27 antreibt, während die Gewindemutter 26 mit dem vorhin erwähnten Betätigungselement 22 zusammenwirkt, das sich am ersten Reibbelag 24 abstützt.

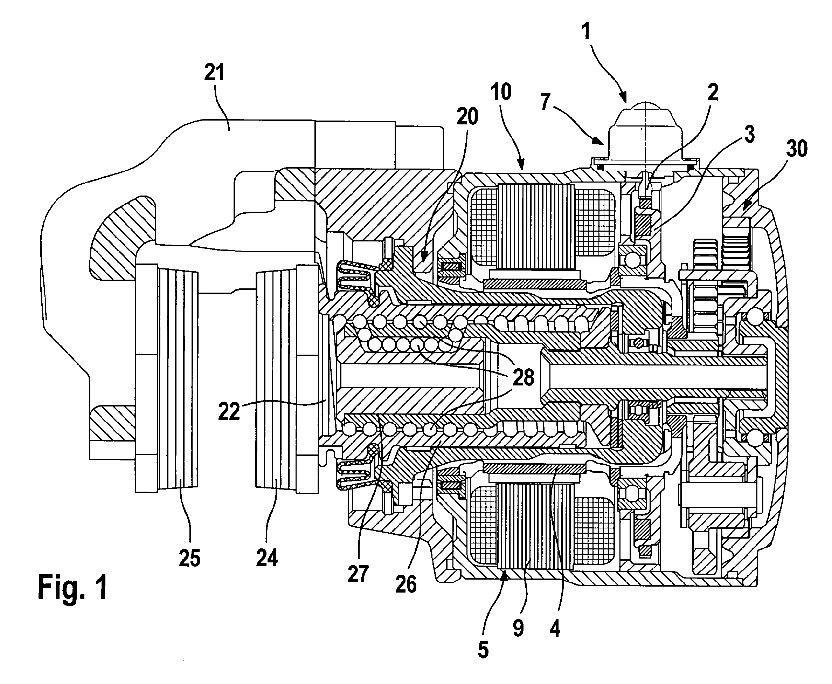

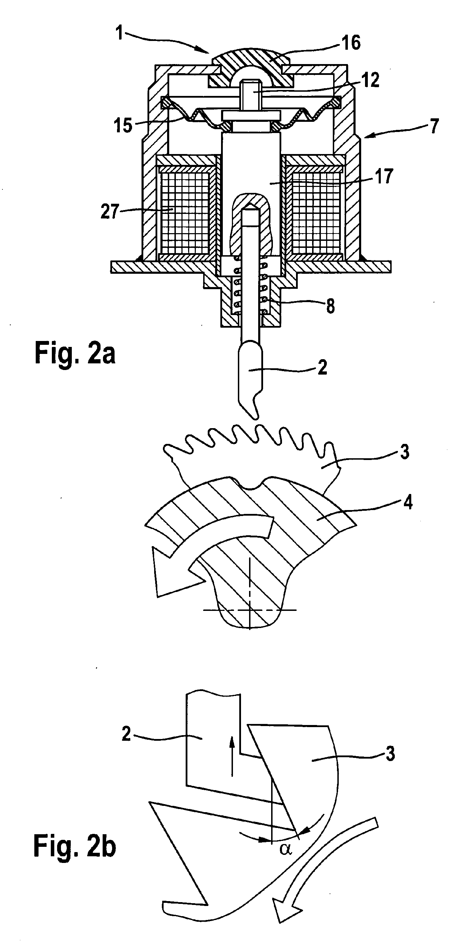

Um die Funktion einer Feststellbremse realisieren zu können weist die Betätigungseinheit eine Verriegelungseinheit auf, die, mit dem Rotor 4 des Elektromotors 5 zusammenwirkend, sein Verriegeln ermöglicht. In der in Fig. 1 gezeigten Scheibenbremse wird die Verriegelungseinheit durch ein mit dem Rotor 4 fest verbundenes Klinkenrad 3 und durch eine als Sperrklinke 2 ausgebildetes Verriegelungselement gebildet. Die Sperrklinke 2 ist mit der Verzahnung des Klinkenrads 3 in Eingriff bringbar. Dabei ist die Sperrklinke 2 von einem Elektromagneten 7 betätigbar, dessen Anker 17 fest mit der Sperrklinke 2 verbunden ist, wie insbesondere in Fig. 2a verdeutlicht ist.

Die in Fig. 2a vereinfacht dargestellte Verriegelungseinheit weist die bereits erwähnte Sperrklinke 2, das Klinkenrad 3, sowie den Elektromagneten 7 auf. Der Pfeil stellt die Drehrichtung des Rotors 4 dar, die eine Verringerung der Zuspannkraft bewirkt. Bei dem in Fig. 2a dargestellten Zustand ist die Sperrklinke 2 nicht betätigt und somit ist der Rotor 4 bzw. die Scheibenbremse nicht verriegelt. Eine Feder 8 ist derart angeordnet, dass der Anker 17 eine stabile Lage in einer Position einnimmt, bei der die Sperrklinke 2 außer Eingriff mit dem Klinkenrad 3 gebracht ist. Der Elektromagnet 7 ist also monostabil ausgebildet.

Zum Einleiten eines Feststellbremsvorgangs wird die Sperrklinke 2 betätigt, indem die Spule 27 bestromt wird, um den Anker 17 zu bewegen. Nachdem der die Scheibenbremse zuspannende Elektromotor 5 abgeschaltet wird, verursacht die Federwirkung des Bremssattels 21 und der beiden Bremsbeläge 24, 25 ein partielles Rückdrehen des Rotors 4 entgegen der Zuspannrichtung, d.h. in Pfeilrichtung des in Fig. 2a dargestellten Pfeils bis die Sperrklinke 2 die weitere Drehung verhindert.

Wie das in Fig. 2b dargestellte Zusammenspiel zwischen Sperrklinke 2 und Klinkenrad 3 verdeutlicht, sind sowohl die Sperrklinke 2 als auch die Zähne des Klinkenrades 3 derart ausgebildet, dass die bereits erwähnte Feder 8 die Sperrklinke 2 mit dem Klinkenrad 3 nicht außer Eingriff bringen kann. Dazu wird der sogenannte Hinterschnittwinkel α entsprechend gewählt. Das bedeutet, dass die Scheibenbremse in ihrem zugespannten Zustand verriegelbar ist, wobei keine elektrische Energie zur Aufrechterhaltung der Verriegelung notwendig ist. Andererseits sind die Sperrklinke 2 und die Zähne des Klinkenrades 3 derart ausgebildet, dass eine Drehung des Rotors 4 in Zuspannrichtung zum Lösen der Verriegelung möglich ist. Die Sperrklinke 2 wird dabei aus dem Klinkenrad 3 gedrückt und durch die Wirkung der in Zusammenhang mit Fig. 2a beschriebenen Feder 8 in diejenige Position gebracht, in der die Sperrklinke 2 mit dem Klinkenrad 3 außer Eingriff gebracht ist. Die Scheibenbremse kann bei entsprechender Ansteuerung des Elektromotors 5 gelöst werden.

Zur Beendigung eines Feststellbremsvorganges muss der Rotor 4 also kurz in Zuspannrichtung bewegt werden, bevor eine Drehung des Rotors 4 entgegen der Zuspannrichtung erfolgen kann.

Bei einem Defekt des Elektromotors 5 oder bei einem Ausfall einer mit dem Elektromotor 5 verbundenen elektrischen Energieversorgung ist eine mechanische Notlösevorrichtung 1 vorgesehen, die auf die Sperrklinke 2 wirkt. Bei der in Fig. 2a dargestellten Ausführungsform ist die Notlösevorrichtung 1 durch ein Gewindeelement 12 gebildet, das auf den Anker 17 wirkt. Durch Betätigung des Gewindeelements 12 wird der Anker 17 und damit auch die fest mit dem Anker 17 verbundene Sperrklinke 2 in der Zeichnung nach oben bewegt, wodurch die Verriegelung des Rotors 4 aufgehoben wird. Um die Verriegelungseinheit vor Schmutz zu schützen ist das Gewindeelement 12 nur nach vorheriger Entfernung einer Schutzkappe 16 zugänglich. Außerdem ist eine längenausgleichende Dichtung 15 vorgesehen.

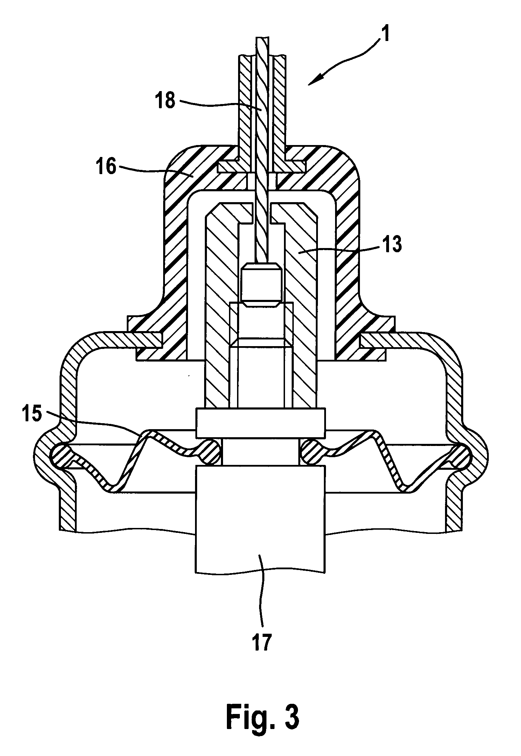

In Fig. 3 ist ein weiteres Ausführungsbeispiel für eine mechanische Notlösevorrichtung 1 dargestellt. Die Notlösevorrichtung 1 wird durch einen mit der hier nicht dargestellten Sperrklinke 2 in kraftübertragender Verbindung stehenden Seilzug 18 gebildet. Zu diesem Zweck ist ein Verbindungselement 13, in dem der Seilzug 18 eingehängt ist, vorgesehen, das mit dem Anker 17 fest verbunden ist. Dabei weist das Verbindungselement 13 ein axiales Spiel auf, so dass bei einer Betätigung des anhand von Fig. 2a beschriebenen Elektromagneten 7 zur Verriegelung des Rotors 4 keine Kraftübertragung von dem Seilzug 18 auf den Anker 17 bzw. auf die Sperrklinke 2 stattfindet. Bei einer Betätigung des Seilzugs 18 wird die Sperrklinke 2 mit dem Klinkenrad 3 manuell außer Eingriff gebracht, wonach sich die elektromechanisch betätigbare Scheibenbremse in einem nicht verriegelten Zustand befindet.

## Patentansprüche

1. Elektromechanisch betätigbare Scheibenbremse für Kraftfahrzeuge mit einer Feststellbremsvorrichtung und einer Betätigungseinheit mit einem Elektromotor (5), dessen Rotor (4) durch eine Verriegelungseinheit mit einem Verriegelungselement (2) verriegelbar ist, **dadurch gekennzeichnet, dass** eine mechanische Vorrichtung (1) vorgesehen ist, die ein Lösen des Eingriffs des Verriegelungselements (2) mit dem Rotor (4) ermöglicht.

2. Elektromechanisch betätigbare Scheibenbremse nach Anspruch 1, **dadurch gekennzeichnet, dass** die Vorrichtung (1) durch einen mit dem Verriegelungselement (2) in zugkraftübertragender Verbindung stehenden Seilzug (18) gebildet ist.

3. Elektromechanisch betätigbare Scheibenbremse nach Anspruch 1, **dadurch gekennzeichnet, dass** die Vorrichtung (1) durch ein mit dem Verriegelungselement (2) in kraftübertragender Verbindung stehendes Gewindeelement (12) gebildet ist.

4. Elektromechanisch betätigbare Scheibenbremse nach einem der vorhergehenden Ansprüche, **dadurch gekennzeichnet, dass** die Verriegelungseinheit durch ein Klinkenrad (3) und eine von einem Elektromagneten (7) betätigbare Sperrklinke (2) gebildet wird, wobei der Anker (17) des Elektromagneten (7) mit Hilfe einer Feder (8) in eine stabile Lage bringbar ist, in der die Sperrklinke (2) mit dem Klinkenrad (3) nicht in Eingriff steht.

5. Elektromechanisch betätigbare Scheibenbremse nach Anspruch 4, **dadurch gekennzeichnet, dass** die Verriegelungseinheit derart ausgebildet ist, dass der Rotor (4) in Zuspannrichtung drehbar ist, wenn die Sperrklinke (2) mit dem Klinkenrad (3) in Eingriff steht.

6. Elektromechanisch betätigbare Scheibenbremse nach Anspruch 4 oder 5, **dadurch gekennzeichnet, dass** die Zähne des Klinkenrades (3) und eine Flanke der Sperrklinke (2), die während einer Verriegelung mit den Zähnen des Klinkenrades (3) in Kontakt steht, derart ausgebildet sind, dass die Feder (8) die Sperrklinke (2) nicht mit dem Klinkenrad (3) außer Eingriff bringen kann, solange auf dem Rotor (4) ein ausreichendes Drehmoment entgegen der Zuspannrichtung lastet.
